# EUROPEAN PATENT APPLICATION

(11) **EP 4 845 205 A1**
(43) Date of publication of application: **25.11.2026**
(21) Application number: 25744628.6
(22) Date of filing: 22.01.2025
(51) Int. Cl.: H04W 24/08

(54) **CHANNEL MEASUREMENT METHOD, APPARATUS, SYSTEM, CHIP MODULE AND STORAGE MEDIUM**

(30) Priority: 27.01.2024 CN 202410119462
(71) Applicant: Huawei Technologies Co., Ltd., Shenzhen, Guangdong 518129 (CN)
(72) Inventor: XU, Jun, Shenzhen, Guangdong 518129 (CN); GAO, Junhui, Shenzhen, Guangdong 518129 (CN); WANG, Xiaohan, Shenzhen, Guangdong 518129 (CN)
(74) Representative: Huawei European IPR
(86) International application number: PCT/CN2025/074040
(87) International publication number: WO 2025/157190

(57) **Abstract**

A channel measurement method, an apparatus, a system, a chip module, and a storage medium are provided. The method may include: A network device sends first information to a terminal device, where the first information indicates a subcarrier index and a symbol index that correspond to a start resource element of a DMRS time-frequency resource subset, indication information of a symbol occupied by the DMRS time-frequency resource subset, a quantity of transmission layers, and association information of a plurality of DMRS time-frequency resource subsets, where the DMRS time-frequency resource subset includes at least one resource element, and each resource element corresponds to one DMRS port; and the terminal device receives or sends a DMRS based on the first information. According to the solution of this application, a quantity of resource elements included in the DMRS time-frequency resource subset is not limited, so that a dynamically changing quantity of orthogonal DMRS ports can be supported, more orthogonal DMRS ports can be provided, and a larger quantity of transport streams can be supported.

## Description

This application claims priority to Chinese Patent Application No. 202410119462.9, filed with the China National Intellectual Property Administration on January 27, 2024 and entitled "CHANNEL MEASUREMENT METHOD, APPARATUS, SYSTEM, CHIP MODULE, AND STORAGE MEDIUM", which is incorporated herein by reference in its entirety.

### TECHNICAL FIELD

This application relates to the field of communication technologies, and in particular, to a channel measurement method, an apparatus, a system, a chip module, and a storage medium.

### BACKGROUND

A 5th generation (5th generation, 5G) mobile communication new radio (new radio, NR) technology has higher requirements on system capacity, spectral efficiency, and the like. In 5G NR, a massive multi-input multi-output (massive multi-input multi-output, massive MIMO) technology plays a crucial role in spectral efficiency of a system. To use spatial degrees of freedom brought by the MIMO technology, a receiver with good performance needs to be designed in both uplink transmission and downlink transmission for data demodulation. Performance of the receiver depends on accuracy of equivalent channel estimation to a great extent. An equivalent channel is a product of a channel matrix and a precoding matrix. To improve uplink and downlink transmission performance, 5G NR uses a demodulation reference signal (demodulation reference signal, DMRS) for uplink and downlink equivalent channel estimation, to demodulate data. The DMRS is sent concurrently with the data and uses the same precoding as the data. Each layer of data needs to be allocated one DMRS port to estimate an equivalent channel of the layer of data. To better estimate an equivalent channel and demodulate data, a plurality of DMRS ports corresponding to a plurality of layers of data are orthogonal.

To further improve the system capacity, a quantity of transmission layers (transmission layers) will greatly increase. Therefore, a DMRS port capacity expansion solution needs to be designed to provide more orthogonal DMRS ports, thereby supporting a larger quantity of transport streams. However, in conventional technologies, a maximum of 24 orthogonal DMRS ports are supported, which causes a significant throughput performance loss.

### SUMMARY

This application provides a channel measurement method, an apparatus, a system, a chip module, and a storage medium, to provide more orthogonal DMRS ports and support a larger quantity of transport streams.

According to a first aspect, a channel measurement method is provided. The method includes: receiving first information, where the first information indicates subcarrier information and symbol information that correspond to a start resource element of a DMRS time-frequency resource subset, indication information of a symbol occupied by the DMRS time-frequency resource subset, a quantity of transmission layers, and association information of the DMRS time-frequency resource subset, where a quantity of resource elements included in the DMRS time-frequency resource subset is greater than or equal to the quantity of transmission layers, and each resource element corresponds to one DMRS port; and receiving or sending a DMRS based on the first information. In this aspect, a terminal device receives information that is related to the DMRS time-frequency resource subset and indicated by a network device, where each resource element in the DMRS time-frequency resource subset corresponds to one DMRS port, and performs transmission of a DMRS based on the indicated information. The quantity of resource elements included in the DMRS time-frequency resource subset is greater than or equal to the quantity of transmission layers, so that a dynamically changing quantity of orthogonal DMRS ports can be supported, more orthogonal DMRS ports can be provided, and a larger quantity of transport streams can be supported.

With reference to the first aspect, in a possible implementation, one resource element corresponds to one subcarrier and one symbol.

With reference to the first aspect, in another possible implementation, a part of the first information indicating the subcarrier information and the symbol information that correspond to the start resource element of the DMRS time-frequency resource subset and the quantity of transmission layers is carried in downlink control information DCI, and a part of the first information indicating the association information of the DMRS time-frequency resource subset and the indication information of the symbol occupied by the DMRS time-frequency resource subset is carried in radio resource control RRC signaling or a medium access control-control element MAC-CE.

With reference to the first aspect, in still another possible implementation, a part of the first information indicating the subcarrier information and the symbol information that correspond to the start resource element of the DMRS time-frequency resource subset, the quantity of transmission layers, and the association information of the DMRS time-frequency resource subset is carried in DCI, and a part of the first information indicating the indication information of the symbol occupied by the DMRS time-frequency resource subset is carried in RRC signaling or a MAC-CE.

With reference to the first aspect, in still another possible implementation, the method further includes: receiving second information, where the second information includes indication information of a quantity of resource elements included in a time-frequency resource set, or the second information includes indication information of a quantity of a plurality of DMRS time-frequency resource subsets, where the time-frequency resource set includes the plurality of DMRS time-frequency resource subsets, and the plurality of DMRS time-frequency resource subsets correspond to a same symbol and different subcarriers. In this implementation, each terminal device may receive a DMRS time-frequency resource set configured by the network device, and each DMRS time-frequency resource subset may be determined in the foregoing manner, so that equivalent channel states on different frequency domain resources can be measured.

With reference to the first aspect, in still another possible implementation, the association information of the DMRS time-frequency resource subset indicates a frequency domain interval between the plurality of DMRS time-frequency resource subsets and/or the quantity of DMRS time-frequency resource subsets. In this implementation, if the network device sends the second information, the second information is used to configure the time-frequency resource set, the time-frequency resource set includes the plurality of DMRS time-frequency resource subsets, and the association information of the DMRS time-frequency resource subset indicates the frequency domain interval between the plurality of DMRS time-frequency resource subsets, the terminal may determine the quantity of DMRS time-frequency resource subsets based on the second information and the frequency domain interval between the plurality of DMRS time-frequency resource subsets. Alternatively, if the network device sends the second information, the second information is used to configure the time-frequency resource set, the time-frequency resource set includes the plurality of DMRS time-frequency resource subsets, and the association information of the DMRS time-frequency resource subset indicates the quantity of DMRS time-frequency resource subsets, the terminal may determine the frequency domain interval between the plurality of DMRS time-frequency resource subsets based on the second information and the quantity of DMRS time-frequency resource subsets.

With reference to the first aspect, in still another possible implementation, the association information of the DMRS time-frequency resource subset indicates a frequency domain interval between a plurality of DMRS time-frequency resource subsets and a quantity of DMRS time-frequency resource subsets. In this implementation, the terminal device may receive the frequency domain interval between the plurality of DMRS time-frequency resource subsets and the quantity of DMRS time-frequency resource subsets that are indicated by the network device, to accurately determine the plurality of DMRS time-frequency resource subsets based on the frequency domain interval between the plurality of DMRS time-frequency resource subsets and the quantity of DMRS time-frequency resource subsets.

With reference to the first aspect, in still another possible implementation, the quantity of transmission layers is X, and for any one of the plurality of DMRS time-frequency resource subsets, starting from the start resource element, L consecutive resource elements are occupied, in a time domain dimension, on a subcarrier on which the start resource element is located; and if L<X, for a next subcarrier in a frequency domain dimension, Q consecutive resource elements are occupied in the time domain dimension on the next subcarrier until X resource elements are occupied, where X, L, and Q are all positive integers.

With reference to the first aspect, in still another possible implementation, the first information is carried in at least one of the following: downlink control information, radio resource control signaling, and a medium access control-control element.

With reference to the first aspect, in still another possible implementation, the second information is carried in at least one of the following: downlink control information, radio resource control signaling, and a medium access control-control element.

For example, the method may be implemented by the terminal device, or a chip or a circuit used in the terminal device.

According to a second aspect, a channel measurement method is provided. The method includes: sending first information, where the first information indicates subcarrier information and symbol information that correspond to a start resource element of a DMRS time-frequency resource subset, indication information of a symbol occupied by the DMRS time-frequency resource subset, a quantity of transmission layers, and association information of the DMRS time-frequency resource subset, where a quantity of resource elements included in the DMRS time-frequency resource subset is greater than or equal to the quantity of transmission layers, and each resource element corresponds to one DMRS port; and sending or receiving a DMRS based on the first information. In this aspect, a network device indicates information related to the DMRS time-frequency resource subset, where each resource element in the DMRS time-frequency resource subset corresponds to one DMRS port, and performs transmission of a DMRS based on the indicated information. The quantity of resource elements included in the DMRS time-frequency resource subset is not limited, so that a dynamically changing quantity of orthogonal DMRS ports can be supported, more orthogonal DMRS ports can be provided, and a larger quantity of transport streams can be supported.

With reference to the second aspect, in a possible implementation, one resource element corresponds to one subcarrier and one symbol.

With reference to the second aspect, in another possible implementation, a part of the first information indicating the subcarrier information and the symbol information that correspond to the start resource element of the DMRS time-frequency resource subset and the quantity of transmission layers is carried in downlink control information DCI, and a part of the first information indicating the association information of the DMRS time-frequency resource subset and the indication information of the symbol occupied by the DMRS time-frequency resource subset is carried in radio resource control RRC signaling or a medium access control-control element MAC-CE.

With reference to the first aspect, in still another possible implementation, a part of the first information indicating the subcarrier information and the symbol information that correspond to the start resource element of the DMRS time-frequency resource subset, the quantity of transmission layers, and the association information of the DMRS time-frequency resource subset is carried in DCI, and a part of the first information indicating the indication information of the symbol occupied by the DMRS time-frequency resource subset is carried in RRC signaling or a MAC-CE.

With reference to the second aspect, in still another possible implementation, the method further includes: sending second information, where the second information includes indication information of a quantity of resource elements included in a time-frequency resource set, or the second information includes indication information of a quantity of a plurality of DMRS time-frequency resource subsets, where the time-frequency resource set includes the plurality of DMRS time-frequency resource subsets, and the plurality of DMRS time-frequency resource subsets correspond to a same symbol and different subcarriers. In this implementation, the network device may configure a DMRS time-frequency resource set for each terminal device, and each DMRS time-frequency resource subset may be determined in the foregoing manner, so that the network device can obtain channel states of different frequency domains fed back by the terminal device.

With reference to the second aspect, in still another possible implementation, the association information of the DMRS time-frequency resource subset indicates a frequency domain interval between the plurality of DMRS time-frequency resource subsets and/or the quantity of DMRS time-frequency resource subsets. In this implementation, if the network device sends the second information, the second information is used to configure the time-frequency resource set, the time-frequency resource set includes the plurality of DMRS time-frequency resource subsets, and the association information of the DMRS time-frequency resource subset indicates the frequency domain interval between the plurality of DMRS time-frequency resource subsets, the terminal may determine the quantity of DMRS time-frequency resource subsets based on the second information and the frequency domain interval between the plurality of DMRS time-frequency resource subsets. Alternatively, if the network device sends the second information, the second information is used to configure the time-frequency resource set, the time-frequency resource set includes the plurality of DMRS time-frequency resource subsets, and the association information of the DMRS time-frequency resource subset indicates the quantity of DMRS time-frequency resource subsets, the terminal may determine the frequency domain interval between the plurality of DMRS time-frequency resource subsets based on the second information and the quantity of DMRS time-frequency resource subsets.

With reference to the second aspect, in still another possible implementation, the association information of the DMRS time-frequency resource subset indicates a frequency domain interval between a plurality of DMRS time-frequency resource subsets and a quantity of DMRS time-frequency resource subsets. In this implementation, the network device may further indicate the frequency domain interval between the plurality of DMRS time-frequency resource subsets and the quantity of DMRS time-frequency resource subsets, so that the terminal device can accurately determine the plurality of DMRS time-frequency resource subsets based on the frequency domain interval between the plurality of DMRS time-frequency resource subsets and the quantity of DMRS time-frequency resource subsets.

With reference to the second aspect, in still another possible implementation, the quantity of transmission layers is X, and for any one of the plurality of DMRS time-frequency resource subsets, starting from the start resource element, L consecutive resource elements are occupied, in a time domain dimension, on a subcarrier on which the start resource element is located; and if L<X, for a next subcarrier in a frequency domain dimension, Q consecutive resource elements are occupied in the time domain dimension on the next subcarrier until X resource elements are occupied, where X, L, and Q are all positive integers.

With reference to the second aspect, in still another possible implementation, the first information is carried in at least one of the following: downlink control information, radio resource control signaling, and a medium access control-control element.

With reference to the second aspect, in still another possible implementation, the second information is carried in at least one of the following: downlink control information, radio resource control signaling, and a medium access control-control element.

For example, the method may be implemented by the network device, or a chip or a circuit used in the network device.

According to a third aspect, a communication apparatus is provided. The communication apparatus may implement the method according to the first aspect or any one of the implementations of the first aspect. For example, the communication apparatus may be a chip or a terminal device. The foregoing method may be implemented by software, hardware, or hardware executing corresponding software.

In a possible implementation, the apparatus includes a transceiver unit and a processing unit. The transceiver unit is configured to receive first information, where the first information indicates subcarrier information and symbol information that correspond to a start resource element of a DMRS time-frequency resource subset, indication information of a symbol occupied by the DMRS time-frequency resource subset, a quantity of transmission layers, and association information of the DMRS time-frequency resource subset, where a quantity of resource elements included in the DMRS time-frequency resource subset is greater than or equal to the quantity of transmission layers, and each resource element corresponds to one DMRS port. The transceiver unit is further configured to receive a DMRS based on the first information, and the processing unit is configured to demodulate the DMRS. Alternatively, the processing unit is further configured to generate a DMRS based on the first information, and the transceiver unit is further configured to send the DMRS.

Optionally, one resource element corresponds to one subcarrier and one symbol.

Optionally, a part of the first information indicating the subcarrier information and the symbol information that correspond to the start resource element of the DMRS time-frequency resource subset and the quantity of transmission layers is carried in downlink control information DCI, and a part of the first information indicating the association information of the DMRS time-frequency resource subset and the indication information of the symbol occupied by the DMRS time-frequency resource subset is carried in radio resource control RRC signaling or a medium access control-control element MAC-CE.

Optionally, a part of the first information indicating the subcarrier information and the symbol information that correspond to the start resource element of the DMRS time-frequency resource subset, the quantity of transmission layers, and the association information of the DMRS time-frequency resource subset is carried in DCI, and a part of the first information indicating the indication information of the symbol occupied by the DMRS time-frequency resource subset is carried in RRC signaling or a MAC-CE.

Optionally, the transceiver unit is further configured to receive second information, where the second information includes indication information of a quantity of resource elements included in a time-frequency resource set, or the second information includes indication information of a quantity of a plurality of DMRS time-frequency resource subsets, where the time-frequency resource set includes the plurality of DMRS time-frequency resource subsets, and the plurality of DMRS time-frequency resource subsets correspond to a same symbol index and different subcarrier indexes.

Optionally, the association information of the DMRS time-frequency resource subset indicates a frequency domain interval between the plurality of DMRS time-frequency resource subsets and/or the quantity of DMRS time-frequency resource subsets.

Optionally, the association information of the DMRS time-frequency resource subset indicates a frequency domain interval between a plurality of DMRS time-frequency resource subsets and a quantity of DMRS time-frequency resource subsets.

Optionally, the quantity of transmission layers is X, and for any one of the plurality of DMRS time-frequency resource subsets, starting from the start resource element, L consecutive resource elements are occupied, in a time domain dimension, on a subcarrier on which the start resource element is located; and if L<X, for a next subcarrier in a frequency domain dimension, Q consecutive resource elements are occupied in the time domain dimension on the next subcarrier until X resource elements are occupied, where X, L, and Q are all positive integers.

Optionally, the first information is carried in at least one of the following: downlink control information, radio resource control signaling, and a medium access control-control element.

Optionally, the second information is carried in at least one of the following: downlink control information, radio resource control signaling, and a medium access control-control element.

For further features and beneficial effects, refer to related descriptions in the first aspect.

According to a fourth aspect, a communication apparatus is provided. The communication apparatus may implement the method according to the second aspect or any one of the implementations of the second aspect. For example, the communication apparatus may be a chip or a network device. The foregoing method may be implemented by software, hardware, or hardware executing corresponding software.

In a possible implementation, the apparatus includes a transceiver unit and a processing unit. The processing unit is configured to generate first information, where the first information indicates subcarrier information and symbol information that correspond to a start resource element of a DMRS time-frequency resource subset, indication information of a symbol occupied by the DMRS time-frequency resource subset, a quantity of transmission layers, and association information of the DMRS time-frequency resource subset, where a quantity of resource elements included in the DMRS time-frequency resource subset is greater than or equal to the quantity of transmission layers, and each resource element corresponds to one DMRS port. The transceiver unit is configured to send the first information; and the transceiver unit is further configured to send or receive a DMRS based on the first information.

Optionally, one resource element corresponds to one subcarrier and one symbol.

Optionally, a part of the first information indicating the subcarrier information and the symbol information that correspond to the start resource element of the DMRS time-frequency resource subset and the quantity of transmission layers is carried in downlink control information DCI, and a part of the first information indicating the association information of the DMRS time-frequency resource subset and the indication information of the symbol occupied by the DMRS time-frequency resource subset is carried in radio resource control RRC signaling or a medium access control-control element MAC-CE.

Optionally, a part of the first information indicating the subcarrier information and the symbol information that correspond to the start resource element of the DMRS time-frequency resource subset, the quantity of transmission layers, and the association information of the DMRS time-frequency resource subset is carried in DCI, and a part of the first information indicating the indication information of the symbol occupied by the DMRS time-frequency resource subset is carried in RRC signaling or a MAC-CE.

Optionally, the transceiver unit is further configured to send second information, where the second information includes indication information of a quantity of resource elements included in a time-frequency resource set, or the second information includes indication information of a quantity of a plurality of DMRS time-frequency resource subsets, where the time-frequency resource set includes the plurality of DMRS time-frequency resource subsets, and the plurality of DMRS time-frequency resource subsets correspond to a same symbol and different subcarriers.

Optionally, the association information of the DMRS time-frequency resource subset indicates a frequency domain interval between the plurality of DMRS time-frequency resource subsets and/or the quantity of DMRS time-frequency resource subsets.

Optionally, the association information of the DMRS time-frequency resource subset indicates a frequency domain interval between a plurality of DMRS time-frequency resource subsets and a quantity of DMRS time-frequency resource subsets.

Optionally, the quantity of transmission layers is X, and for any one of the plurality of DMRS time-frequency resource subsets, starting from the start resource element, L consecutive resource elements are occupied, in a time domain dimension, on a subcarrier on which the start resource element is located; and if L<X, for a next subcarrier in a frequency domain dimension, Q consecutive resource elements are occupied in the time domain dimension on the next subcarrier until X resource elements are occupied, where X, L, and Q are all positive integers.

Optionally, the first information is carried in at least one of the following: downlink control information, radio resource control signaling, and a medium access control-control element.

Optionally, the second information is carried in at least one of the following: downlink control information, radio resource control signaling, and a medium access control-control element.

For further features and beneficial effects, refer to related descriptions in the second aspect.

In another possible implementation, the communication apparatus in the third aspect and the fourth aspect includes a processor coupled to a memory. The processor is configured to support the apparatus in performing a corresponding function in the foregoing channel state information reporting method. The memory is configured to be coupled to the processor, and the memory stores a computer program (or computer-executable instructions) and/or data necessary for the apparatus. Optionally, the communication apparatus may further include a communication interface, configured to support communication between the apparatus and another network element, for example, sending or receiving of data and/or a signal. For example, the communication interface may be a transceiver, a circuit, a bus, a module, or another type of communication interface. Optionally, the memory may be located inside the communication apparatus and integrated with the processor, or may be located outside the communication apparatus.

In still another possible implementation, the communication apparatuses in the third aspect or the fourth aspect include a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method by using a logic circuit or executing code instructions. The transceiver apparatus may be a transceiver, a transceiver circuit, or an input/output interface, and is configured to receive a signal from a communication apparatus other than the communication apparatus and transmit the signal to the processor, or send a signal from the processor to a communication apparatus other than the communication apparatus. When the communication apparatus is a chip, the transceiver apparatus is a transceiver circuit or an input/output interface.

When the communication apparatus in the third aspect or the fourth aspect is a chip, a sending unit may be an output unit, for example, an output circuit or a communication interface, and a receiving unit may be an input unit, for example, an input circuit or a communication interface. When the communication apparatus is a terminal device, the sending unit may be a transmitter or a transmitter machine, and the receiving unit may be a receiver or a receiver machine.

According to a fifth aspect, a communication system is provided. The communication system includes the communication apparatus according to the third aspect or any one of the implementations of the third aspect and the communication apparatus according to the fourth aspect or any one of the implementations of the fourth aspect.

According to a sixth aspect, a computer-readable storage medium is provided. The computer-readable storage medium stores a computer program or instructions. When the program or the instructions are executed by a processor, the method according to the first aspect or any one of the implementations of the first aspect is implemented, or the method according to the second aspect or any one of the implementations of the second aspect is implemented.

According to a seventh aspect, a computer program product is provided. When the computer program product is executed on a compute device, the method according to the first aspect or any one of the implementations of the first aspect is implemented, or the method according to the second aspect or any one of the implementations of the second aspect is implemented.

### BRIEF DESCRIPTION OF DRAWINGS

FIG. 1 is a diagram of an architecture of a communication system 1000 to which an embodiment of this application is applied;
FIG. 2A(a) to FIG. 2A(c) to FIG. 2D are diagrams of network architectures according to an embodiment of this application;
FIG. 3A is a diagram of a Type 1 DMRS pattern;
FIG. 3B is a diagram of a Type 2 DMRS pattern;
FIG. 4A is a diagram of a Type 1 enhanced DMRS pattern;
FIG. 4B is a diagram of a Type 2 enhanced DMRS pattern;
FIG. 5 is a schematic flowchart of a channel measurement method according to an embodiment of this application;
FIG. 6 is a diagram of an example of a time-frequency resource according to an embodiment of this application;
FIG. 7 is a diagram of an example of DMRS resource allocation according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

The following describes embodiments of this application with reference to the accompanying drawings in embodiments of this application.

The technical solutions provided in this application may be applied to various communication systems, for example, may be applied to a 5G communication system, a future evolved system, or a plurality of converged communication systems, or may be applied to an existing communication system. Application scenarios of the technical solutions provided in this application may include a plurality of scenarios, for example, machine-to-machine (machine-to-machine, M2M), macro-micro communication, enhanced mobile broadband (enhanced mobile broadband, eMBB), ultra-reliable and low-latency communication (ultra-reliable & low-latency communication, uRLLC), and massive machine-type communications (massive machine-type communications, mMTC). These scenarios may include but are not limited to a scenario of communication between terminal devices, a scenario of communication between network devices, a scenario of communication between a network device and a terminal device, and the like. The network device includes a network device and a core network device. The following provides descriptions by using an example in which the technical solutions are applied to the scenario of communication between the network device and the terminal device.

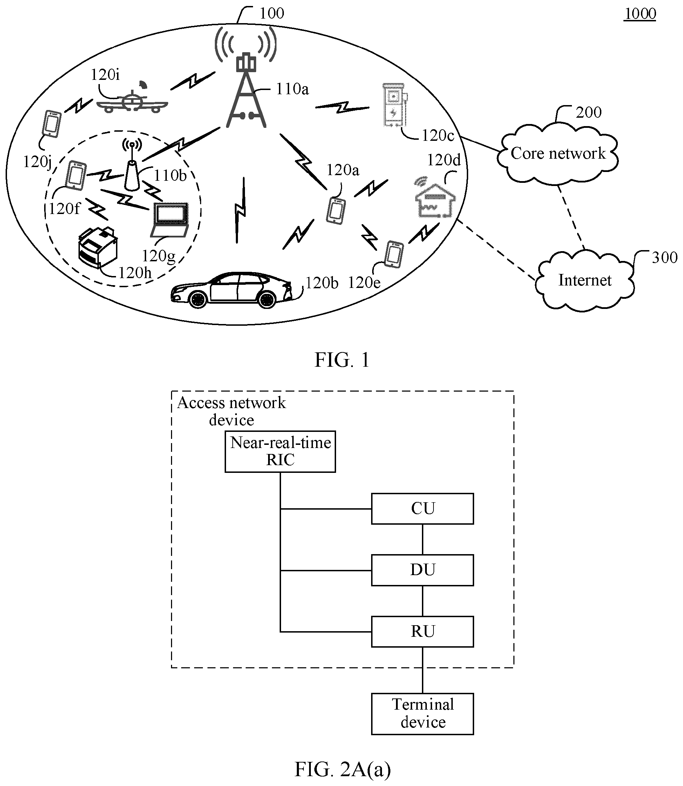

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one network device (for example, 110a and 110b in FIG. 1), and may further include at least one terminal device (for example, 120a to 120j in FIG. 1). The terminal device is connected to the network device in a wireless manner, and the network device is connected to the core network in a wireless or wired manner. A core network device and the network device may be different physical devices that are independent of each other, a function of the core network device and a logical function of the network device may be integrated into a same physical device, or a part of functions of the core network device and a part of functions of the network device may be integrated into one physical device. Mutual connections between terminal devices and between network devices may be implemented in a wired or wireless manner. FIG. 1 is merely a diagram. The communication system may further include another network device, for example, may further include a wireless relay device and a wireless backhaul device, which are not shown in FIG. 1.

Optionally, in actual application, the wireless communication system may include a plurality of network devices (also referred to as access network devices), or may include a plurality of terminal devices. One network device may serve one or more terminal devices. One terminal device may also access one or more network devices. A quantity of terminal devices and a quantity of network devices that are included in the wireless communication system are not limited in embodiments of this application.

The network device may be an entity configured to transmit or receive a signal on a network side. The network device may be an access device through which the terminal device accesses the wireless communication system in a wireless manner. For example, the network device may be a base station. The base station may cover various names in a broad sense, or may be replaced with the following names, for example, a radio access network (radio access network, RAN) node, a NodeB (NodeB), an evolved NodeB (evolved NodeB, eNB), a next generation NodeB (next generation NodeB, gNB), an access network device in an open radio access network (open radio access network, O-RAN), a relay station, an access point, a transmitting and receiving point (transmitting and receiving point, TRP), a transmitting point (transmitting point, TP), a master eNodeB (master eNB, MeNB), a secondary eNodeB (secondary eNB, SeNB), a multi-standard radio (multi-standard radio, MSR) node, a home base station, a network controller, an access node, a radio node, an access point (access point, AP), a transmission node, a transceiver node, a baseband unit (building baseband unit, BBU), a remote radio unit (remote radio unit, RRU), an active antenna unit (active antenna unit, AAU), a radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the network device may be a communication module, a modem, or a chip that is disposed in the foregoing device or apparatus. Alternatively, the network device may be a mobile switching center, a device that functions as a base station in device-to-device (device-to-device, D2D), vehicle-to-everything (vehicle-to-everything, V2X), or machine-to-machine (machine-to-machine, M2M) communication, a network side device in a 6G network, a device that functions as a base station in a future communication system, or the like. The network device may support networks using a same access technology or different access technologies. A specific technology and a specific device form that are used by the network device are not limited in embodiments of this application.

The network device may be fixed or mobile. For example, the base stations 110a and 110b are stationary, and are responsible for wireless transmission and reception in one or more cells from the terminal device 120. A helicopter or an uncrewed aerial vehicle 120i shown in FIG. 1 may be configured to serve as a mobile base station, and one or more cells may move based on a location of the mobile base station 120i. In another example, the helicopter or uncrewed aerial vehicle (120i) may be configured to serve as a terminal device communicating with the base station 110b.

In this application, a communication apparatus configured to implement a function of the access network may be an access network device, a network device having a part of functions of the access network, or an apparatus that can support implementation of the function of the access network, for example, a chip system, a hardware circuit, a software module, or a hardware circuit plus a software module. The apparatus may be mounted in the access network device or used together with the access network device. In the method in this application, an example in which the communication apparatus configured to implement the function of the access network device is an access network device is used for description.

The terminal device may be an entity, for example, a mobile phone, that is configured to receive or transmit a signal on a user side. The terminal device may be configured to connect to a person, an object, and a machine. The terminal device may communicate with one or more core networks via the network device. The terminal device includes a handheld device having a wireless connection function, another processing device connected to a wireless modem, a vehicle-mounted device, or the like. The terminal device may be a portable, pocket-sized, handheld, computer builtin, or vehicle-mounted mobile apparatus. The terminal device 120 may be widely used in various scenarios, such as cellular communication, D2D, V2X, point-to-point (point-to-point, P2P), machine-to-machine (machine-to-machine, M2M), machine type communication (machine type communication, MTC), an internet of things (internet of things, IoT), virtual reality (virtual reality, VR), augmented reality (augmented reality, AR), industrial control, autonomous driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery and mobility. Some examples of the terminal device 120 are a 3GPP standard user equipment (user equipment, UE), a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart home device, an industrial device, a personal communications service (personal communications service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a VR device, an AR device, a wireless terminal in industrial control (industrial control), a terminal in an internet of vehicles system, a wireless terminal in self-driving (self-driving), a wireless terminal in a smart grid (smart grid), a wireless terminal in transportation safety (transportation safety), a wireless terminal like a smart fuel dispenser in a smart city (smart city), a terminal device on a high-speed train, and a wireless terminal like a smart speaker, a smart coffee machine, or a smart printer in a smart home (smart home). The terminal device 120 may be a wireless device in the foregoing scenarios or an apparatus disposed in the wireless device, for example, a communication module, a modem, or a chip in the foregoing device. The terminal device may also be referred to as a terminal, a terminal equipment, a user equipment (user equipment, UE), a mobile station (mobile station, MS), a mobile terminal (mobile terminal, MT), or the like. Alternatively, the terminal device may be a terminal device in a future wireless communication system. The terminal device may be used in a dedicated network device or a general-purpose device. A specific technology and a specific device form that are used by the terminal device are not limited in embodiments of this application.

Optionally, the terminal device may be configured to serve as a base station. For example, the UE may serve as a scheduling entity that provides sidelink signals between UEs in V2X, D2D, P2P, or the like. As shown in FIG. 1, a cellular phone 120a and a car 120b communicate with each other by using sidelink signals. The cellular phone 120a communicates with a smart home device 120e without relaying a communication signal via the base station 110b.

In this application, a communication apparatus configured to implement a function of the terminal device may be a terminal device, a terminal device having a part of functions of the terminal device, or an apparatus that can support implementation of the foregoing function of the terminal device, for example, a chip system. The apparatus may be mounted in the terminal device or used together with the terminal device. In this application, the chip system may include a chip, or may include a chip and another discrete device. In the technical solutions provided in this application, an example in which the communication apparatus is a terminal device or a UE is used for description.

Optionally, the wireless communication system usually includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. Optionally, one cell may correspond to one carrier or component carrier.

In some deployments, the network device mentioned in embodiments of this application may be a device including a CU or a DU, a device including a CU and a DU, or a device including a CU control plane (a central unit-control plane (central unit-control plane, CU-CP)) node, a CU user plane (a central unit-user plane (central unit-user plane, CU-UP)) node, and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes respectively implement a part of functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, in comparison with the CPRI, the interface performs transfer of a part of downlink and/or uplink baseband functions. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting between the DU and the RU correspond to different categories (categories, Cats) of eCPRIs, for example, eCPRI Cats A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions after the layer mapping (for example, one or more of RE mapping, digital beamforming (beamforming, BF), or inverse fast Fourier transform (inverse fast Fourier transform, IFFT)/cyclic prefix (cyclic prefix, CP) addition) are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions after the demapping (for example, one or more of digital BF or fast Fourier transform (fast Fourier transform, FFT)/CP removal) are moved to the RU for implementation. It may be understood that, for function descriptions of DUs and RUs corresponding to various categories of eCPRIs, refer to the eCPRI protocol. Details are not described herein.

In a possible design, a processing unit configured to implement a baseband function in the BBU is referred to as a baseband high (baseband high, BBH) unit, and a processing unit configured to implement a baseband function in the RRU/AAU/RRH is referred to as a baseband low (baseband low, BBL) unit.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support the network device in implementing the function, for example, a chip system, a hardware circuit, a software module, or a combination of a hardware circuit and a software module. The apparatus may be mounted in the network device or used together with the network device. In embodiments of this application, an example in which the apparatus configured to implement the function of the network device is a network device is merely used for description, and constitutes no limitation on the solutions in embodiments of this application.

It may be understood that, this application may be applied between a network device and a terminal device.

Communication between the network device and the terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer for transmitting data related to an AI function.

Data transmission between the network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Data is encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

To support an AI technology in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over-the-top (over-the-top, OTT) system. The AI node may communicate with another device in the communication system. For example, the another device may be one or more of the following: a network device, a terminal device, a network element of a core network, or the like.

It may be understood that a quantity of AI nodes is not limited in this application. For example, when there are a plurality of AI nodes, the plurality of AI nodes may be divided based on functions. For example, different AI nodes are responsible for different functions.

It may be further understood that, the AI nodes may be independent devices, may be integrated into a same device to implement different functions, may be network elements in a hardware device, may be software functions running on dedicated hardware, or may be virtualized functions instantiated on a platform (for example, a cloud platform). A specific form of the AI node is not limited in this application.

The AI node may be an AI network element or an AI module.

One or more AI modules are disposed in one or more devices of these network element nodes, such as a core network device, an access network node (a RAN node), a terminal, or an OAM. The access network node may serve as an independent RAN node, or may include a plurality of RAN nodes, for example, include a CU and a DU. One or more AI modules may be further disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight value of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of the neural network.

One AI module may have one or more models. One model may obtain one output through inference, where the output includes one or more parameters. Learning processes, training processes, or inference processes of different models may be deployed in different nodes or devices, or may be deployed in a same node or device.

The communication system includes a RAN intelligent controller (RAN intelligent controller, RIC). For example, the RIC may be the AI module, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be at a granularity of seconds. A real-time RIC mainly processes near-real-time information, for example, latency-sensitive data. A latency of the data is at a granularity of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may serve as training data or inference data. Optionally, the near-real-time RIC may deliver an inference result to the RAN node and/or the terminal. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may serve as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

Alternatively, the near-real-time RIC and the non-real-time RIC each may be independently disposed as a network element. Optionally, the near-real-time RIC and the non-real-time RIC may alternatively serve as a part of another device. For example, the near-real-time RIC is disposed on the RAN node (for example, the CU or the DU), and the non-real-time RIC is disposed in an OAM, a cloud server, a core network device, or another network device.

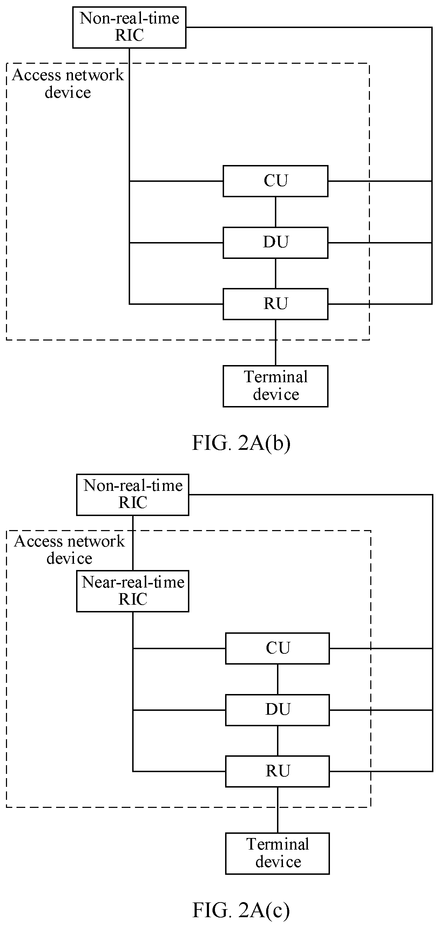

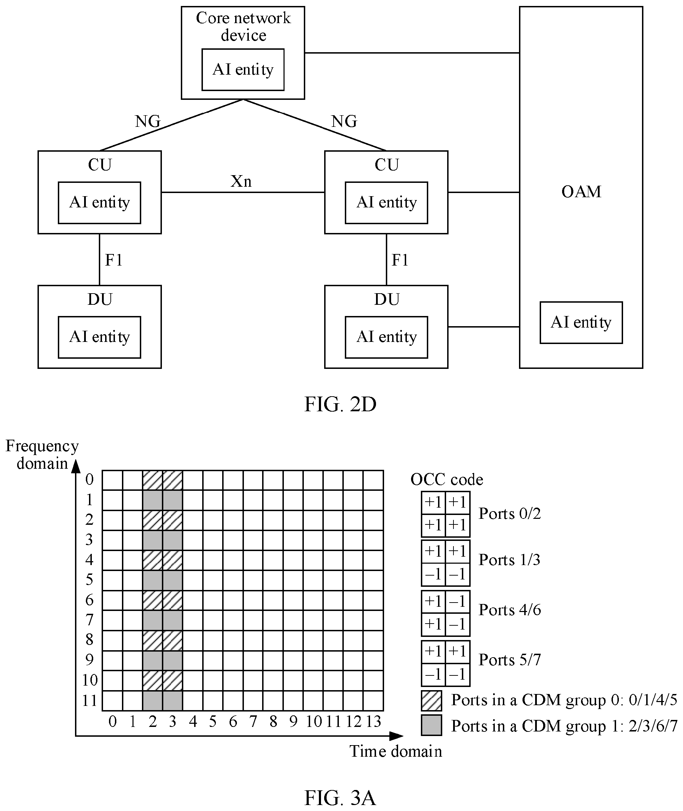

For example, disposition of the near-real-time RIC and the non-real-time RIC in a network architecture may be as shown in FIG. 2A(a) to FIG. 2A(c) to FIG. 2D.

As shown in FIG. 2A(a), in a first possible implementation, an access network device includes a near-real-time RIC module, to perform model learning and/or inference.

As shown in FIG. 2A(b), in a second possible implementation, in a communication system, a non-real-time RIC may be included outside the access network device. Optionally, the non-real-time RIC may be located in an OAM or a core network device.

As shown in FIG. 2A(c), in a third possible implementation, the access network device includes a near-real-time RIC, and a non-real-time RIC is further included outside the access network device. Optionally, the non-real-time RIC may be located in an OAM or a core network device.

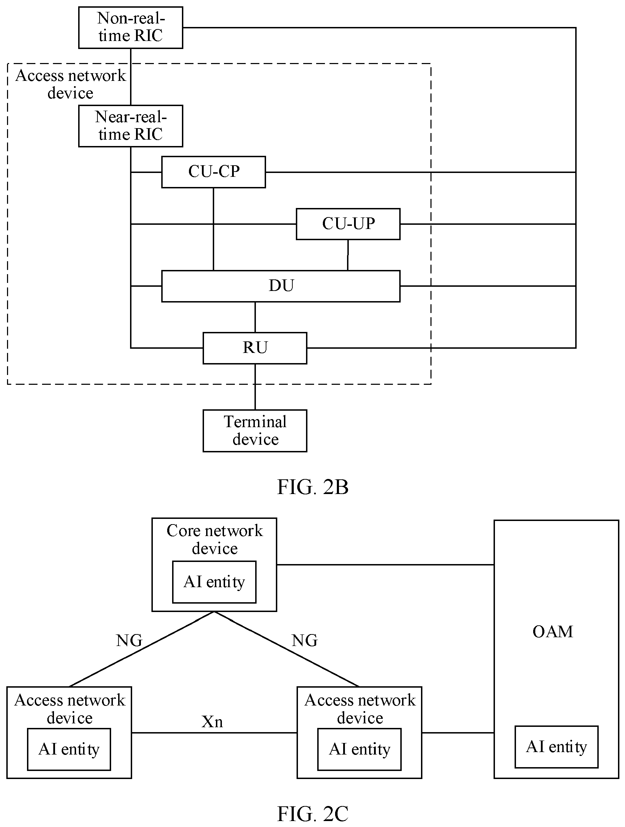

In comparison with FIG. 2A(c), in FIG. 2B, the CU is split into a CU-CP and a CU-UP. The near-real-time RIC and the non-real-time RIC are disposed in a same way as FIG. 2A(c).

As shown in FIG. 2C, optionally, the access network device includes one or more AI entities, and a function of the AI entity is similar to that of the near-real-time RIC. Optionally, the OAM includes one or more AI entities, and a function of the AI entity is similar to that of the non-real-time RIC. Optionally, the core network device includes one or more AI entities, and a function of the AI entity is similar to that of the non-real-time RIC. When the OAM and the core network device each include an AI entity, models obtained through training by the AI entities of the OAM and the core network device are different, and/or models configured to perform inference are different. In this application, that the models are different includes at least one of the following: structure parameters of the models (for example, quantities of layers and/or weights of the models) are different; input parameters of the models are different; or output parameters of the models are different.

In comparison with FIG. 2C, the access network device in FIG. 2D is split into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained through training by the AI entities of the CU and the DU are different, and/or models configured to perform inference are different. Optionally, the CU in FIG. 2D may be further split into a CU-CP and a CU-UP. Optionally, one or more AI models may be deployed in the CU-CP, and/or one or more AI models may be deployed in the CU-UP. Optionally, in FIG. 2C or FIG. 2D, an OAM of the access network device and an OAM of the core network device may be separately and independently deployed.

It should be understood that quantities and types of devices in the communication system shown in FIG. 1 are merely used as an example. This application is not limited thereto. In actual application, the communication system may further include more terminal devices and more access network devices, and may further include another network element, for example, may include a core network device and/or a network element configured to implement an artificial intelligence function.

It may be understood that all or a part of functions implemented by one or more of the terminal device, the access network device, the core network device, or the network element configured to implement the artificial intelligence function may be virtualized, that is, implemented by using one or more of a dedicated processor or a general-purpose processor and a corresponding software module. Because the terminal device and the access network device are related to an air interface transmission interface, a transceiver function of the interface may be implemented by hardware. Core network devices such as an operations, administration, and maintenance (operations, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

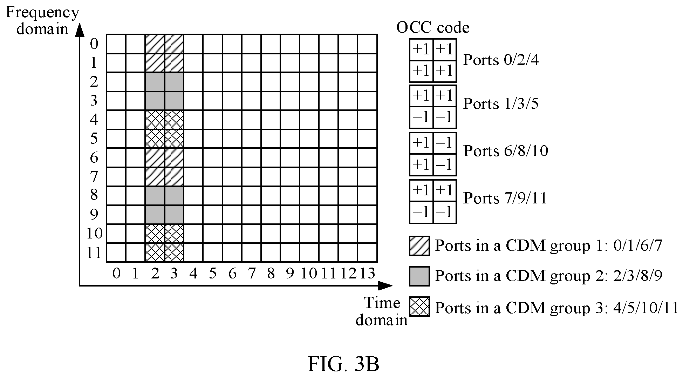

In the 5G NR release 17 (Release 17, Rel-17) standard, based on a maximum quantity of orthogonal ports supported by a DMRS, the DMRS includes two types: Type 1 (Type 1) and Type 2 (Type 2). Based on different quantities of symbols occupied by DMRSs, the DMRSs are classified into two types: single-symbol DMRSs and double-symbol DMRSs. FIG. 3A is a diagram of a Type 1 DMRS pattern (pattern). FIG. 3B is a diagram of a Type 2 DMRS pattern. Both FIG. 3A and FIG. 3B are double-symbol patterns (a column represents the time domain, a row represents the frequency domain, a quantity of columns represents a quantity of symbols, and a quantity of rows represents a quantity of resource elements (resource elements, REs) in a resource block (resource block, RB)). Main characteristics of Type 1 and Type 2 are as follows:
Type 1:
   (1) A maximum of four ports are supported for a single-symbol configuration, and a maximum of eight ports are supported for a double-symbol configuration (as shown in FIG. 3A, ports 0 to 7 are supported).
   (2) Two code division multiplexing (code division multiplexing, CDM) groups are included (as shown in FIG. 3A, two CDM groups, namely, a CDM group 0 and a CDM group 1, are supported).
   (3) Each DMRS port occupies six REs in each RB (one RB has 12 REs).
Type 2:
   (1) A maximum of six ports are supported for a single-symbol configuration, and a maximum of 12 ports are supported for a double-symbol configuration (as shown in FIG. 3B, ports 0 to 11 are supported).
   (2) Three CDM groups are included (as shown in FIG. 3B, three CDM groups, namely, a CDM group 0 to a CDM group 2, are supported).
   (3) Each DMRS port occupies four REs in each RB.

It can be learned from FIG. 3A and FIG. 3B that DMRS ports in different CDM groups occupy different REs, and orthogonality is implemented through frequency division multiplexing (frequency division multiplexing, FDM). DMRS ports in a same CDM group occupy a same RE, and orthogonality is implemented through code division multiplexing of an orthogonal cover code (orthogonal cover code, OCC). Type 1 is used as an example. The CDM group 0 has four DMRS ports: 0, 1, 4, and 5, and the four DMRS ports occupy six REs in one RB (for example, a plurality of RBs may alternatively be configured on a network side, and the four DMRS ports in the CDM group 0 occupy six REs in each RB). The CDM group 1 has four DMRS ports: 2, 3, 6, and 7, and the four DMRS ports occupy the other six REs in each RB. It can be learned that, in the CDM group 0/CDM group 1, six REs in one RB may be divided into three groups, and each group includes four consecutive REs (two REs in frequency domain and two REs in time domain). For the four REs in each group, an OCC 4 formed by an FD-OCC 2 and a TD-OCC 2 is used to enable four orthogonal DMRS ports (it is assumed that channels of the four REs are the same). OCC codes of each DMRS port on the four REs are shown in FIG. 3A. Each orthogonal DMRS port is allocated to each layer of data, to estimate an equivalent channel of the layer of data on the four REs. The three groups of REs multiplex the same OCC 4, to estimate channels of the four orthogonal DMRS ports at different frequency domain positions. To be specific, each RB may estimate channels at three frequency domain positions, and then interpolation and filtering are performed to estimate channels on other REs, so that channels on all REs in one RB are estimated, and then are used for data demodulation.

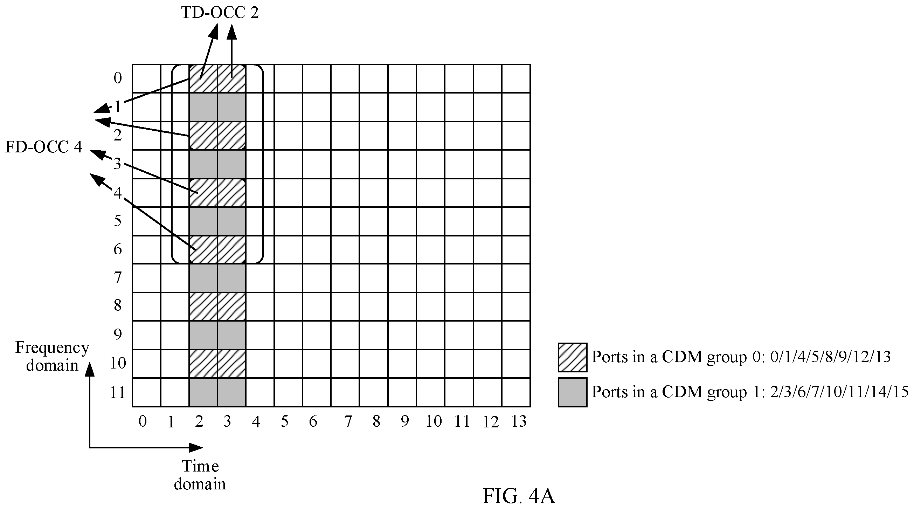

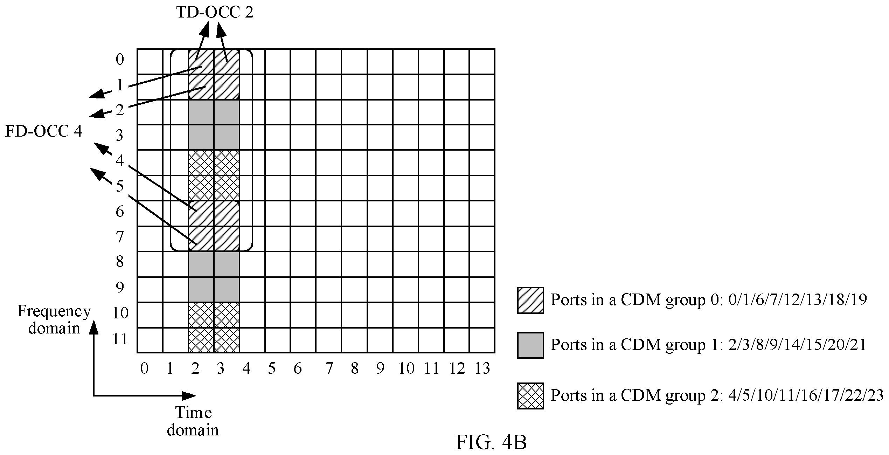

In the 5G NR release 18 (Release 18, Rel-18) standard, orthogonal expansion is performed on a Type 1 DMRS, and twice the quantity of DMRS ports are supported, to reach 16 ports, as shown in a diagram of a Type 1 enhanced DMRS pattern (Type 1 enhanced DMRS pattern) shown in FIG. 4A. Orthogonal expansion is performed on a Type 2 DMRS, and twice the quantity of DMRS ports are supported, to reach 24 ports, as shown in a diagram of a Type 2 enhanced DMRS pattern (Type 2 enhanced DMRS pattern) shown in FIG. 4B.

A Type 1 enhanced DMRS is used as an example. In the original Rel-17 standard, DMRSs corresponding to DMRS ports 0, 1, 4, and 5 in the CDM group 0 are sent on subcarriers 0 and 2 of a symbol 2 and a symbol 3, and an FD-OCC 2 and a TD-OCC 2 are used to enable orthogonality between the four ports. Other time-frequency resources occupied by the CDM group 0 and time-frequency resources corresponding to the subcarriers 0 and 2 are multiplexed to send corresponding DMRSs. In the Rel-18 standard, DMRSs corresponding to DMRS ports 0, 1, 4, 5, 8, 9, 12, and 13 in the CDM group 0 are sent on subcarriers 0, 2, 4, and 6 of the symbol 2 and the symbol 3, and an FD-OCC 4 and a TD-OCC 2 are used to enable orthogonality between the eight ports. Other time-frequency resources occupied by the CDM group 0 and time-frequency resources corresponding to the subcarriers 0, 2, 4, and 6 are multiplexed to send corresponding DMRSs. Therefore, two CDM groups support a total of 16 orthogonal DMRS ports.

A Type 2 enhanced DMRS is used as an example. In the original Rel-17 standard, DMRSs corresponding to DMRS ports 0, 1, 6, and 7 in the CDM group 0 are sent on subcarriers 0 and 1 of the symbol 2 and the symbol 3, and the FD-OCC 2 and the TD-OCC 2 are used to enable orthogonality between the four ports. Other time-frequency resource occupied by the CDM group 0 and time-frequency resources corresponding to the subcarriers 0 and 1 are multiplexed to send corresponding DMRSs. In the Rel-18 standard, DMRSs corresponding to DMRS ports 0, 1, 6, 7, 12, 13, 18, and 19 in the CDM group 0 are sent on subcarriers 0, 1, 6, and 7 of the symbol 2 and the symbol 3, and the FD-OCC 4 and the TD-OCC 2 are used to enable orthogonality between the eight ports. Other time-frequency resources occupied by the CDM group 0 and time-frequency resources corresponding to the subcarriers 0, 1, 6, and 7 are multiplexed to send corresponding DMRSs. Therefore, three CDM groups support a total of 24 orthogonal DMRS ports.

However, in future mobile communication, a quantity of transmission layers is expected to increase, and more orthogonal DMRS ports are required to ensure data transmission performance. In conventional technologies, a maximum of 24 orthogonal DMRS ports are supported, and data transmission at more transmission layers cannot be supported, which causes a significant throughput performance loss.

Therefore, this application provides a communication solution. A terminal device receives information that is related to a DMRS time-frequency resource subset and indicated by a network device, where each resource element in the DMRS time-frequency resource subset corresponds to one DMRS port, and performs transmission of a DMRS based on the indicated information. A quantity of resource elements included in the DMRS time-frequency resource subset is not limited, so that a dynamically changing quantity of orthogonal DMRS ports can be supported, more orthogonal DMRS ports can be provided, and a larger quantity of transport streams can be supported.

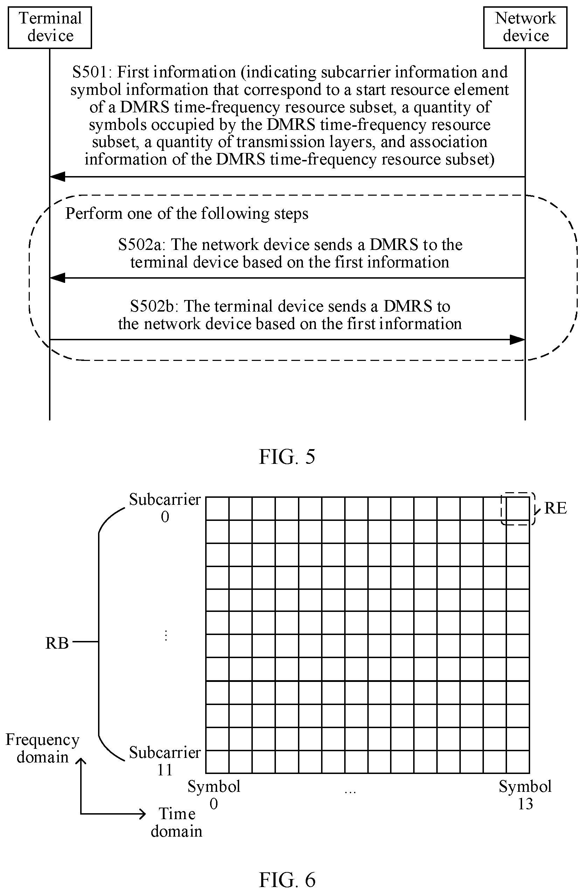

FIG. 5 is a schematic flowchart of a channel measurement method according to an embodiment of this application. The method may include the following steps.

S501: A network device sends first information to a terminal device. Correspondingly, the terminal device receives the first information.

For example, in NR, FIG. 6 is a diagram of an example of a time-frequency resource according to an embodiment of this application. In time domain, a minimum resource granularity may be one orthogonal frequency division multiplexing (orthogonal frequency division multiplexing, OFDM) symbol (symbol), which may be referred to as a symbol for short. In frequency domain, a minimum resource granularity may be one subcarrier. One OFDM symbol and one subcarrier may form one resource element (resource element, RE), and one slot (slot) and 12 consecutive subcarriers in frequency domain may form one RB. One slot may include a plurality of consecutive OFDM symbols in time domain. For example, one slot includes 14 consecutive OFDM symbols.

In this embodiment, the network device may configure a time-frequency resource set for the terminal device, and the time-frequency resource set may include a plurality of REs. The time-frequency resource set is used to send a DMRS corresponding to the terminal device. The network device may send a DMRS to the terminal device on the time-frequency resource set in downlink transmission, to measure a downlink equivalent channel of the terminal device. Alternatively, the terminal device may send a DMRS on the time-frequency resource set in uplink transmission, to measure an uplink equivalent channel of the terminal device.

The time-frequency resource set may include a plurality of DMRS time-frequency resource subsets. The plurality of DMRS time-frequency resource subsets correspond to a same symbol and different subcarriers. The plurality of DMRS time-frequency resource subsets are a plurality of (at least two) time-frequency resource subsets used to send a DMRS, and each DMRS time-frequency resource subset includes a time-frequency resource for sending the DMRS.

For example, before performing step S501, the network device may send second information to the terminal device. Correspondingly, the terminal device receives the second information. The second information is used to configure the time-frequency resource set. In an example, the second information may include indication information of a quantity of REs included in the time-frequency resource set. For example, the second information may include the quantity of REs included in the time-frequency resource set. In another example, the time-frequency resource set may include indication information of a quantity of the plurality of DMRS time-frequency resource subsets. For example, the second information may include the quantity of DMRS time-frequency resource subsets included in the time-frequency resource set. In still another example, the time-frequency resource set may include indication information of a quantity of REs included in the time-frequency resource set and indication information of a quantity of the plurality of DMRS time-frequency resource subsets. For example, the second information may be carried in at least one of the following signaling: radio resource control (radio resource control, RRC) signaling and a medium access control-control element (medium access control-control element, MAC-CE).

It may be understood that the time-frequency resource set corresponding to the terminal device may alternatively be predefined in a protocol. Therefore, the step of sending the second information by the network device is optional.

After the terminal device determines the time-frequency resource set, before receiving or sending a DMRS, the terminal device needs to obtain the first information, to determine the plurality of DMRS time-frequency resource subsets included in the time-frequency resource set. The first information indicates subcarrier information and symbol information that correspond to a start resource element of the DMRS time-frequency resource subset, indication information of a symbol occupied by the DMRS time-frequency resource subset, a quantity of transmission layers, and association information of the DMRS time-frequency resource subset.

The indication information of the symbol occupied by the DMRS time-frequency resource subset may indicate a quantity of occupied symbols. For example, when the quantity of symbols occupied by the DMRS time-frequency resource subset is a single symbol, the indication information indicates that the quantity of occupied symbols is 1; or when the quantity of symbols occupied by the DMRS time-frequency resource subset is double symbols, the indication information indicates that the quantity of occupied symbols is 2. For another example, the indication information may indicate specific symbols occupied by the DMRS time-frequency resource subset, for example, a symbol 1 and a symbol 2. A representation manner of the indication information is not limited in this application.

In an implementation, the network device sends the first information to the terminal device. For example, the first information may be carried in any one of the following signaling: downlink control information (downlink control information, DCI), RRC signaling, and a MAC-CE.

In another implementation, different information in the first information sent by the network device to the terminal device is respectively carried in different signaling. For example, a part of the first information indicating the subcarrier information and the symbol information that correspond to the start resource element of the DMRS time-frequency resource subset and the quantity of transmission layers is carried in DCI. In addition, before step S501, the network device may further preconfigure, by using RRC signaling or a MAC-CE, a part of the first information indicating the association information of the DMRS time-frequency resource subset and the indication information of the symbol occupied by the DMRS time-frequency resource subset. For example, a subcarrier corresponding to the start resource element of the DMRS time-frequency resource subset is a 1^{st} subcarrier in the time-frequency resource set, and a symbol corresponding to the DMRS time-frequency resource subset is a preset symbol (for example, a 2^{nd} symbol and a 3^{rd} symbol in each slot). The symbol occupied by the DMRS time-frequency resource subset is one symbol or a preset value, and the quantity of transmission layers is 1 or a preset value.

For example, a part of the first information indicating the subcarrier information and the symbol information that correspond to the start resource element of the DMRS time-frequency resource subset, the quantity of transmission layers, and the association information of the DMRS time-frequency resource subset is carried in DCI. In addition, before step S501, the network device may further preconfigure, by using RRC signaling or a MAC-CE, a part of the first information indicating the indication information of the symbol occupied by the DMRS time-frequency resource subset.

For example, a part of the first information indicating the association information of the plurality of DMRS time-frequency resource subsets, the subcarrier information and the symbol information that correspond to the start resource element of the DMRS time-frequency resource subset, the indication information of the symbol occupied by the DMRS time-frequency resource subset, and the quantity of transmission layers is carried in DCI. Other information in the first information is preconfigured by using RRC signaling or a MAC-CE.

For example, the subcarrier information may be a subcarrier index, or the subcarrier information may be other information indicating a subcarrier. This is not limited in this application.

For example, the symbol information may be a symbol index, or the symbol information may be other information indicating a symbol. This is not limited in this application.

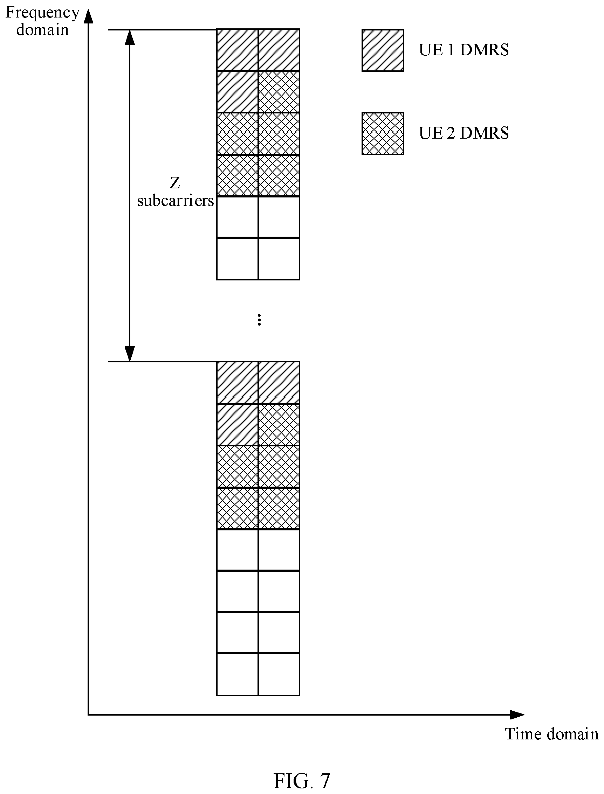

For example, the network device and the terminal device may determine a DMRS time-frequency resource subset according to the following method: FIG. 7 is a diagram of an example of DMRS resource allocation according to an embodiment of this application. It is assumed that the quantity of transmission layers of the terminal device is X, a quantity of time domain symbols in the time-frequency resource set allocated by the network device to the terminal device is Y, the time-frequency resource set includes the plurality of DMRS time-frequency resource subsets, any two DMRS time-frequency resource subsets occupy a same symbol in time domain and occupy different subcarriers in frequency domain, and a frequency domain interval between two adjacent DMRS time-frequency resource subsets is Z subcarriers. For a 1^{st} time-frequency resource subblock, starting from the start resource element, L consecutive resource elements are first occupied, in a time domain dimension, on a subcarrier on which the start resource element is located, and are sequentially numbered 1, ..., and L. If L<X, for a next subcarrier in a frequency domain dimension, Q consecutive resource elements are occupied in the time domain dimension, and are sequentially numbered L+1, ..., and L+Q. If L+Q<X, the foregoing process is repeated on a still next subcarrier, so that a DMRS time-frequency resource subset including X resource elements is finally allocated to the terminal device, and the X resource elements are sequentially numbered 1, ..., and X. Further, after the frequency domain interval of Z subcarriers, the foregoing process is repeated to obtain X resource elements occupied by a 2^{nd} DMRS time-frequency resource subset, and the X resource elements are still sequentially numbered 1, ..., and X, until the plurality of DMRS time-frequency resource subsets indicated by the second information are determined, or until a quantity of REs included in the plurality of determined DMRS time-frequency resource subsets reaches the quantity of REs indicated by the second information. X, L, Q, and Z are all positive integers, Z is greater than or equal to $\left⌈X/Y\right⌉$, and ┌ ┐ represents rounding up. One DMRS port corresponds to one transmission layer, and one DMRS port occupies one RE, that is, one RE corresponds to only one DMRS port. Therefore, these DMRS ports are orthogonal. Because different DMRS ports occupy different REs, and time-frequency resources occupied by the different DMRS ports are orthogonal, for each layer of data, one RE corresponding to each of the plurality of DMRS time-frequency resource subsets is detected to demodulate the DMRS.

The association information of the DMRS time-frequency resource subset indicates a frequency domain interval between the plurality of DMRS time-frequency resource subsets and the quantity of DMRS time-frequency resource subsets. The association information of the DMRS time-frequency resource subset may be implemented as follows.

In an implementation, if the network device sends the second information, the second information is used to configure the time-frequency resource set, the time-frequency resource set includes the plurality of DMRS time-frequency resource subsets, and the association information of the DMRS time-frequency resource subset indicates the frequency domain interval between the plurality of DMRS time-frequency resource subsets, the terminal device may determine the quantity of DMRS time-frequency resource subsets based on the second information and the frequency domain interval between the plurality of DMRS time-frequency resource subsets. Alternatively, if the network device sends the second information, the second information is used to configure the time-frequency resource set, the time-frequency resource set includes the plurality of DMRS time-frequency resource subsets, and the association information of the DMRS time-frequency resource subset indicates the quantity of DMRS time-frequency resource subsets, the terminal device may determine the frequency domain interval between the plurality of DMRS time-frequency resource subsets based on the second information and the quantity of DMRS time-frequency resource subsets. Alternatively, if the network device sends the second information, the second information is used to configure the time-frequency resource set, and the time-frequency resource set includes the plurality of DMRS time-frequency resource subsets, the association information of the DMRS time-frequency resource subset may indicate the quantity of DMRS time-frequency resource subsets and the frequency domain interval between the plurality of DMRS time-frequency resource subsets.

In another implementation, if the network device does not send the second information, the network device may indicate, in the association information of the DMRS time-frequency resource subset, the frequency domain interval between the plurality of DMRS time-frequency resource subsets and the quantity of DMRS time-frequency resource subsets.

For example, still refer to FIG. 7. A horizontal axis represents symbols in time domain, and a vertical axis represents subcarriers in frequency domain. The network device sends the first information to a terminal device 1. The first information indicates that the subcarrier corresponding to the start resource element of the DMRS time-frequency resource subset is a 1^{st} subcarrier (the subcarriers in FIG. 7 are numbered from a high frequency to a low frequency), a symbol corresponding to the start resource element of the DMRS time-frequency resource subset is a 1^{st} symbol, the symbols occupied by the DMRS time-frequency resource subset are the symbol 1 and the symbol 2, and the quantity of transmission layers is 3. The association information of the DMRS time-frequency resource subset indicates that the frequency domain interval between the plurality of DMRS time-frequency resource subsets is Z subcarriers and/or indicates the quantity of DMRS time-frequency resource subsets (for example, 2). Similarly, the network device sends the first information to a terminal device 2. The first information indicates that the subcarrier corresponding to the start resource element of the DMRS time-frequency resource subset is a 2^{nd} subcarrier (a frequency of the 2^{nd} subcarrier is lower than a frequency of the 1^{st} subcarrier), the symbol corresponding to the start resource element of the DMRS time-frequency resource subset is a 2^{nd} symbol, the symbols occupied by the DMRS time-frequency resource subset are the symbol 1 and the symbol 2, and the quantity of transmission layers is 5. The association information of the DMRS time-frequency resource subset indicates that the frequency domain interval between the plurality of DMRS time-frequency resource subsets is Z subcarriers and/or the quantity of DMRS time-frequency resource subsets is, for example, 2. It should be noted that, the subcarrier corresponding to the start resource element of the DMRS time-frequency resource subset shown in FIG. 7 is a subcarrier with the highest frequency in the subcarriers occupied by the DMRS time-frequency resource subset, and the symbol corresponding to the start resource element of the DMRS time-frequency resource subset is a symbol with the smallest value in the symbols occupied by the DMRS time-frequency resource subset. Alternatively, in specific implementation, the subcarrier corresponding to the start resource element of the DMRS time-frequency resource subset may be a subcarrier with the lowest frequency in the subcarriers occupied by the DMRS time-frequency resource subset, and the symbol corresponding to the start resource element of the DMRS time-frequency resource subset may be a symbol with the largest value in the symbols occupied by the DMRS time-frequency resource subset; or the like. This is not limited in this application.

A quantity of resource elements included in the DMRS time-frequency resource subset is greater than or equal to the quantity of transmission layers. One resource element corresponds to one subcarrier and one symbol (to be specific, one resource element occupies one subcarrier in frequency domain and occupies one symbol in time domain). Each resource element corresponds to one DMRS port, to be specific, each resource element corresponds to only one DMRS port.

Further, one of the following steps S502a or S502b is performed.

S502a: The network device sends a DMRS to the terminal device based on the first information. Correspondingly, the terminal device receives the DMRS based on the first information.

After sending the first information to the terminal device, the network device sends the DMRS to the terminal device on the time-frequency resource set. The terminal device receives and measures the DMRS on the time-frequency resource set based on the first information to obtain channel information, and sends the channel information to the network device, to measure the downlink equivalent channel of the terminal device.

S502b: The terminal device sends a DMRS to the network device based on the first information. Correspondingly, the network device receives the DMRS based on the first information.

After the network device sends the first information to the terminal device, the terminal device sends the DMRS to the network device on the time-frequency resource set. The network device receives and measures the DMRS on the time-frequency resource set, to measure the uplink equivalent channel of the terminal device.

According to the channel measurement method provided in embodiments of this application, the terminal device receives information that is related to the DMRS time-frequency resource subset and indicated by the network device, where each resource element in the DMRS time-frequency resource subset corresponds to one DMRS port, and performs transmission of a DMRS based on the indicated information. The quantity of resource elements included in the DMRS time-frequency resource subset is not limited, so that a dynamically changing quantity of orthogonal DMRS ports can be supported, more orthogonal DMRS ports can be provided, and a larger quantity of transport streams can be supported.

In conventional technologies, in frequency domain, the DMRS needs to be repeatedly sent at an interval of one RB or two RBs. However, in this embodiment, a frequency domain interval Z for repeated transmission of the DMRS is flexible and variable, so that the quantity of resource elements included in the DMRS time-frequency resource subset is flexible and variable. The quantity of resource elements in the DMRS time-frequency resource subset is equal to a quantity of streams, that is, equal to a quantity of DMRS ports, so that the dynamically changing quantity of orthogonal DMRS ports is supported.

In this application, "sending information to... (for example, a terminal device)" or a related description in the accompanying drawings may be understood as that a destination end of the information is the terminal device, and may include directly or indirectly sending the information to the terminal device. "Receiving information from... (for example, a terminal device)", "receiving information of... (for example, a terminal device)", or a related description in the accompanying drawings may be understood as that a source end of the information is the terminal device, and may include directly or indirectly receiving the information from the terminal device. Information may undergo necessary processing, for example, a format change, between a source end for sending the information and a destination end. However, the destination end may understand valid information from the source end. Similar expressions in this application may be understood similarly. Details are not described herein again.

It may be understood that, in this application, an example in which a terminal device and a network device are used as execution entities of an interaction example is used for description. However, the execution entities of the interaction example are not limited in this application. For example, the terminal device in the method provided in this application may be a chip, a chip system, or a processor that is used in the terminal device, or may be a logical node, a logical module, or software that can implement all or a part of functions of the terminal device. The network device in the method provided in this application may be a chip, a chip system, or a processor that is used in the network device, or may be a logical node, a logical module, or software that can implement all or a part of functions of the network device.

It may be understood that, to implement functions in the foregoing embodiments, the network device and the terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

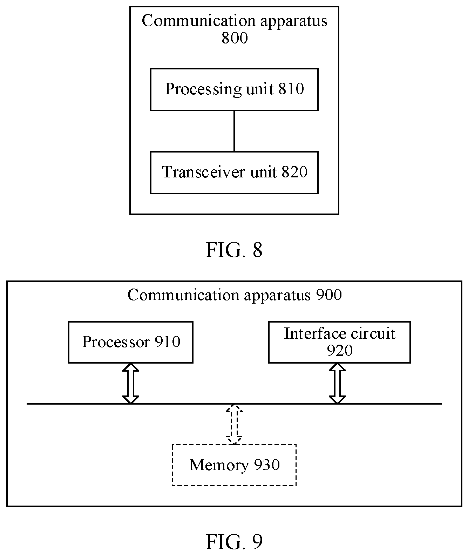

FIG. 8 and FIG. 9 are diagrams of structures of possible communication apparatuses according to embodiments of this application. These communication apparatuses may be configured to implement functions of the terminal device or the network device in the foregoing method embodiments. Therefore, beneficial effects of the foregoing method embodiments can also be implemented. In embodiments of this application, the communication apparatus may be one of the terminal devices 120a to 120j shown in FIG. 1, or may be the network device 110a or 110b shown in FIG. 1, or may be a module (for example, a chip) used in the terminal device or the network device.

As shown in FIG. 8, the communication apparatus 800 includes a processing unit 810 and a transceiver unit 820. The communication apparatus 800 is configured to implement functions of the terminal device or the network device in the method embodiment shown in FIG. 5.

When the communication apparatus 800 is configured to implement the functions of the terminal device in the method embodiment shown in FIG. 5, the transceiver unit 820 is configured to implement the functions of the terminal device in one or more of steps S501, S502a, and S502b in the embodiment shown in FIG. 5.

When the communication apparatus 800 is configured to implement the functions of the network device in the method embodiment shown in FIG. 5, the transceiver unit 820 is configured to implement the functions of the network device in one or more of steps S501, S502a, and S502b in the embodiment shown in FIG. 5. For example, the transceiver unit 820 may be deployed on the DU or the RU in FIG. 2A(a) to FIG. 2A(c) or FIG. 2B, and the processing unit 810 may be deployed on the DU in FIG. 2A(a) to FIG. 2A(c) or FIG. 2B. Alternatively, for the processing unit 810, a part of functions are deployed on the DU and a part of functions are deployed on the CU (the CU-CP in the CU-CP/CU-UP architecture) in FIG. 2A(a) to FIG. 2A(c) or FIG. 2B. For another example, both the transceiver unit 820 and the processing unit 810 may be deployed on the DU in FIG. 2D.

For more detailed descriptions of the processing unit 810 and the transceiver unit 820, directly refer to related descriptions in the method embodiment shown in FIG. 5. Details are not described herein again.

When the communication apparatus is a chip used in the terminal device, the chip in the terminal device implements the functions of the terminal device in the foregoing method embodiments. The chip in the terminal device receives information from another module (for example, a radio frequency module or an antenna) in the terminal device, where the information is sent by the network device to the terminal device. Alternatively, the chip in the terminal device sends information to another module (for example, a radio frequency module or an antenna) in the terminal device, where the information is sent by the terminal device to the network device.

When the communication apparatus is a chip used in the network device, the chip in the network device implements the functions of the network device in the foregoing method embodiments. The chip in the network device receives information from another module (for example, a radio frequency module or an antenna) in the network device, where the information is sent by the terminal device to the network device. Alternatively, the chip in the network device sends information to another module (for example, a radio frequency module or an antenna) in the network device, where the information is sent by the network device to the terminal device.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

As shown in FIG. 9, the communication apparatus 900 includes a processor 910, and may further include an interface circuit 920. The processor 910 and the interface circuit 920 are coupled to each other. It may be understood that the interface circuit 920 may be a transceiver or an input/output interface. Optionally, the communication apparatus 900 may further include a memory 930 (represented by dashed lines in the figure), configured to store instructions executed by the processor 910, or store input data required by the processor 910 to run instructions, or store data generated after the processor 910 runs the instructions.

When the communication apparatus 900 is configured to implement the functions of the terminal device in the method embodiment shown in FIG. 5, the interface circuit 920 is configured to implement the functions of the terminal device in one or more of steps S501, S502a, and S502b in the embodiment shown in FIG. 5.

When the communication apparatus 900 is configured to implement the functions of the network device in the method embodiment shown in FIG. 5, the interface circuit 920 is configured to implement the functions of the network device in one or more of steps S501, S502a, and S502b in the embodiment shown in FIG. 5.

For more detailed descriptions of the processor 910 and the interface circuit 920, directly refer to related descriptions in the method embodiment shown in FIG. 5. Details are not described herein again.

In this application, division into the modules is an example, and is merely logical function division. During actual implementation, there may be another division manner. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is caused to perform the method in the foregoing embodiments.

An embodiment of this application further provides a communication system, including the foregoing communication apparatus.

An embodiment of this application further provides a circuit. The circuit is coupled to a memory, and the circuit is configured to perform the method shown in the foregoing embodiments. The circuit may include a chip circuit.

When the communication apparatus is a module used in a network device, the module in the network device implements functions of the network device in the foregoing method embodiments. The module in the network device receives information from another module (for example, a radio frequency module or an antenna) in the network device, where the information is sent by a UE to the network device. Alternatively, the module in the network device sends information to another module (for example, a radio frequency module or an antenna) in the network device, where the information is sent by the network device to a UE. The module in the network device herein may be a baseband chip of the network device, may be a CU, a DU, or another module, or may be an apparatus in an open radio access network (open radio access network, O-RAN) architecture, for example, an apparatus like an open CU or an open DU.

It should be noted that one or more of the foregoing units or units may be implemented by software, hardware, or a combination of software and hardware. When any one of the foregoing units or units is implemented by software, the software exists in a form of computer program instructions, and is stored in the memory. A processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or a transistor logic device, a discrete hardware component, or all or a part of circuits in the foregoing device that are configured to implement a processing function, and may implement or perform the methods, steps, and logical block diagrams disclosed in this application. The general-purpose processor may be a microprocessor, any conventional processor, or the like. The steps of the methods disclosed with reference to this application may be directly performed and completed by a hardware processor, or may be performed and completed by a combination of hardware and a software module in the processor.

When the foregoing units or units are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device. The hardware may run necessary software or does not depend on software to perform the foregoing method procedure.

Optionally, an embodiment of this application further provides a chip system, including at least one processor and an interface. The at least one processor is coupled to a memory through the interface. When the at least one processor executes a computer program or instructions in the memory, the chip system is caused to perform the method in any one of the foregoing method embodiments. Optionally, the chip system may include a chip, or may include a chip and another discrete device. This is not specifically limited in this embodiment of this application.

The memory in this application may alternatively be a circuit or any other apparatus that can implement a storage function, and is configured to store program instructions and/or data. The memory is any other medium that can carry or store expected program code in a form of instructions or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

It may be understood that, in this application, an "indication" may include a direct indication, an indirect indication, an explicit indication, and an implicit indication.

When a piece of indication information is described as indicating A, it may be understood as that the indication information carries A, directly indicates A, or indirectly indicates A. In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmitting end device by sending configuration information to a receiving end device.

It should be understood that unless otherwise specified, "/" in descriptions of this application indicates an "or" relationship between associated objects. For example, A/B may indicate A or B. A and B may be singular or plural. In addition, in the descriptions of this application, unless otherwise specified, "a plurality of" means two or more. "At least one of the following items (pieces)" or a similar expression thereof indicates any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

All or a part of the foregoing embodiments may be implemented by using software, hardware, firmware, or any combination thereof. When a software program is used to implement embodiments, all or a part of embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, the description of each embodiment has respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

## Claims

1. A channel measurement method, wherein the method comprises:
receiving first information, wherein the first information indicates subcarrier information and symbol information that correspond to a start resource element of a demodulation reference signal DMRS time-frequency resource subset, indication information of a symbol occupied by the DMRS time-frequency resource subset, a quantity of transmission layers, and association information of the DMRS time-frequency resource subset, wherein a quantity of resource elements comprised in the DMRS time-frequency resource subset is greater than or equal to the quantity of transmission layers, and each resource element corresponds to one DMRS port; and
receiving or sending a DMRS based on the first information.

2. The method according to claim 1, wherein a part of the first information indicating the subcarrier information and the symbol information that correspond to the start resource element of the DMRS time-frequency resource subset and the quantity of transmission layers is carried in downlink control information DCI, and a part of the first information indicating the association information of the DMRS time-frequency resource subset and the indication information of the symbol occupied by the DMRS time-frequency resource subset is carried in radio resource control RRC signaling or a medium access control-control element MAC-CE.

3. The method according to claim 1 or 2, wherein the method further comprises:
receiving second information, wherein the second information comprises indication information of a quantity of resource elements comprised in a time-frequency resource set, or the second information comprises indication information of a quantity of a plurality of DMRS time-frequency resource subsets, wherein the time-frequency resource set comprises the plurality of DMRS time-frequency resource subsets, and the plurality of DMRS time-frequency resource subsets correspond to a same symbol and different subcarriers.

4. The method according to claim 3, wherein the association information of the DMRS time-frequency resource subset indicates a frequency domain interval between the plurality of DMRS time-frequency resource subsets and/or the quantity of DMRS time-frequency resource subsets.

5. The method according to claim 1 or 2, wherein the association information of the DMRS time-frequency resource subset indicates a frequency domain interval between a plurality of DMRS time-frequency resource subsets and a quantity of DMRS time-frequency resource subsets.

6. The method according to any one of claims 3 to 5, wherein the quantity of transmission layers is X, and for any one of the plurality of DMRS time-frequency resource subsets, starting from the start resource element, L consecutive resource elements are occupied in a time domain dimension, on a subcarrier on which the start resource element is located; and
if L<X, for a next subcarrier in a frequency domain dimension, Q consecutive resource elements are occupied in the time domain dimension on the next subcarrier until X resource elements are occupied, wherein
X, L, and Q are all positive integers.

7. The method according to any one of claims 1 to 6, wherein the first information is carried in at least one of the following signaling: downlink control information DCI, radio resource control RRC signaling, and a medium access control-control element MAC-CE.

8. A channel measurement method, wherein the method comprises:
sending first information, wherein the first information indicates subcarrier information and symbol information that correspond to a start resource element of a demodulation reference signal DMRS time-frequency resource subset, indication information of a symbol occupied by the DMRS time-frequency resource subset, a quantity of transmission layers, and association information of the DMRS time-frequency resource subset, wherein a quantity of resource elements comprised in the DMRS time-frequency resource subset is greater than or equal to the quantity of transmission layers, and each resource element corresponds to one DMRS port; and
sending or receiving a DMRS based on the first information.

9. The method according to claim 8, wherein a part of the first information indicating the subcarrier information and the symbol information that correspond to the start resource element of the DMRS time-frequency resource subset and the quantity of transmission layers is carried in downlink control information DCI, and a part of the first information indicating the association information of the DMRS time-frequency resource subset and the indication information of the symbol occupied by the DMRS time-frequency resource subset is carried in radio resource control RRC signaling or a medium access control-control element MAC-CE.

10. The method according to claim 8 or 9, wherein the method further comprises:
sending second information, wherein the second information comprises indication information of a quantity of resource elements comprised in a time-frequency resource set, or the second information comprises indication information of a quantity of a plurality of DMRS time-frequency resource subsets, wherein the time-frequency resource set comprises the plurality of DMRS time-frequency resource subsets, and the plurality of DMRS time-frequency resource subsets correspond to a same symbol and different subcarriers.

11. The method according to claim 10, wherein the association information of the DMRS time-frequency resource subset indicates a frequency domain interval between the plurality of DMRS time-frequency resource subsets and/or the quantity of DMRS time-frequency resource subsets.

12. The method according to claim 8 or 9, wherein the association information of the DMRS time-frequency resource subset indicates a frequency domain interval between a plurality of DMRS time-frequency resource subsets and a quantity of DMRS time-frequency resource subsets.

13. The method according to any one of claims 10 to 12, wherein the quantity of transmission layers is X, and for any one of the plurality of DMRS time-frequency resource subsets, starting from the start resource element, L consecutive resource elements are occupied, in a time domain dimension, on a subcarrier on which the start resource element is located; and
if L<X, for a next subcarrier in a frequency domain dimension, Q consecutive resource elements are occupied in the time domain dimension on the next subcarrier until X resource elements are occupied, wherein
X, L, and Q are all positive integers.

14. The method according to any one of claims 8 to 13, wherein the first information is carried in at least one of the following signaling: downlink control information DCI, radio resource control RRC signaling, and a medium access control-control element MAC-CE.

15. A communication apparatus, wherein the apparatus comprises a transceiver unit and a processing unit, wherein
the transceiver unit is configured to receive first information, wherein the first information indicates subcarrier information and symbol information that correspond to a start resource element of a demodulation reference signal DMRS time-frequency resource subset, indication information of a symbol occupied by the DMRS time-frequency resource subset, a quantity of transmission layers, and association information of the DMRS time-frequency resource subset, wherein a quantity of resource elements comprised in the DMRS time-frequency resource subset is greater than or equal to the quantity of transmission layers, and each resource element corresponds to one DMRS port; and
the transceiver unit is further configured to receive a DMRS based on the first information, and the processing unit is configured to demodulate the DMRS; or
the processing unit is further configured to generate a DMRS based on the first information, and the transceiver unit is further configured to send the DMRS.

16. The apparatus according to claim 15, wherein a part of the first information indicating the subcarrier information and the symbol information that correspond to the start resource element of the DMRS time-frequency resource subset and the quantity of transmission layers is carried in downlink control information DCI, and a part of the first information indicating the association information of the DMRS time-frequency resource subset and the indication information of the symbol occupied by the DMRS time-frequency resource subset is carried in radio resource control RRC signaling or a medium access control-control element MAC-CE.

17. The apparatus according to claim 15 or 16, wherein the transceiver unit is further configured to receive second information, wherein the second information comprises indication information of a quantity of resource elements comprised in a time-frequency resource set, or the second information comprises indication information of a quantity of a plurality of DMRS time-frequency resource subsets, wherein the time-frequency resource set comprises the plurality of DMRS time-frequency resource subsets, and the plurality of DMRS time-frequency resource subsets correspond to a same symbol and different subcarriers.

18. The apparatus according to claim 17, wherein the association information of the DMRS time-frequency resource subset indicates a frequency domain interval between the plurality of DMRS time-frequency resource subsets and/or the quantity of DMRS time-frequency resource subsets.

19. The apparatus according to claim 15 or 16, wherein the association information of the DMRS time-frequency resource subset indicates a frequency domain interval between a plurality of DMRS time-frequency resource subsets and a quantity of DMRS time-frequency resource subsets.

20. The apparatus according to any one of claims 17 to 19, wherein the quantity of transmission layers is X, and for any one of the plurality of DMRS time-frequency resource subsets, starting from the start resource element, L consecutive resource elements are occupied, in a time domain dimension, on a subcarrier on which the start resource element is located; and
if L<X, for a next subcarrier in a frequency domain dimension, Q consecutive resource elements are occupied in the time domain dimension on the next subcarrier until X resource elements are occupied, wherein
X, L, and Q are all positive integers.

21. The apparatus according to any one of claims 15 to 20, wherein the first information is carried in at least one of the following signaling: downlink control information DCI, radio resource control RRC signaling, and a medium access control-control element MAC-CE.

22. A communication apparatus, wherein the apparatus comprises a processing unit and a transceiver unit, wherein
the processing unit is configured to generate first information, wherein the first information indicates subcarrier information and symbol information that correspond to a start resource element of a demodulation reference signal DMRS time-frequency resource subset, indication information of a symbol occupied by the DMRS time-frequency resource subset, a quantity of transmission layers, and association information of the DMRS time-frequency resource subset, wherein a quantity of resource elements comprised in the DMRS time-frequency resource subset is greater than or equal to the quantity of transmission layers, and each resource element corresponds to one DMRS port;
the transceiver unit is configured to send the first information; and
the transceiver unit is further configured to send or receive a DMRS based on the first information.

23. The apparatus according to claim 22, wherein a part of the first information indicating the subcarrier information and the symbol information that correspond to the start resource element of the DMRS time-frequency resource subset and the quantity of transmission layers is carried in downlink control information DCI, and a part of the first information indicating the association information of the DMRS time-frequency resource subset and the indication information of the symbol occupied by the DMRS time-frequency resource subset is carried in radio resource control RRC signaling or a medium access control-control element MAC-CE.

24. The apparatus according to claim 22 or 23, wherein the transceiver unit is further configured to send second information, wherein the second information comprises indication information of a quantity of resource elements comprised in a time-frequency resource set, or the second information comprises indication information of a quantity of a plurality of DMRS time-frequency resource subsets, wherein the time-frequency resource set comprises the plurality of DMRS time-frequency resource subsets, and the plurality of DMRS time-frequency resource subsets correspond to a same symbol index and different subcarrier indexes.

25. The apparatus according to claim 24, wherein the association information of the DMRS time-frequency resource subset indicates a frequency domain interval between the plurality of DMRS time-frequency resource subsets and/or the quantity of DMRS time-frequency resource subsets.

26. The apparatus according to claim 22 or 23, wherein the association information of the DMRS time-frequency resource subset indicates a frequency domain interval between a plurality of DMRS time-frequency resource subsets and a quantity of DMRS time-frequency resource subsets.

27. The apparatus according to any one of claims 24 to 26, wherein the quantity of transmission layers is X, and for any one of the plurality of DMRS time-frequency resource subsets, starting from the start resource element, L consecutive resource elements are occupied, in a time domain dimension, on a subcarrier on which the start resource element is located; and
if L<X, for a next subcarrier in a frequency domain dimension, Q consecutive resource elements are occupied in the time domain dimension on the next subcarrier until X resource elements are occupied, wherein
X, L, and Q are all positive integers.

28. The apparatus according to any one of claims 22 to 27, wherein the first information is carried in at least one of the following signaling: downlink control information DCI, radio resource control RRC signaling, and a medium access control-control element MAC-CE.

29. A communication system, wherein the system comprises a first communication apparatus and a second communication apparatus, the first communication apparatus is configured to implement the method according to any one of claims 1 to 7, and the second communication apparatus is configured to implement the method according to any one of claims 8 to 14.

30. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 7 or the method according to any one of claims 8 to 14 by using a logic circuit or executing code instructions.

31. The communication apparatus according to claim 30, wherein the communication apparatus is a chip.

32. A chip module, comprising a transceiver component and a chip, wherein the chip is configured to perform the method according to any one of claims 1 to 7 or the method according to any one of claims 8 to 14.

33. A computer-readable storage medium, wherein the computer-readable storage medium stores a computer program, and when the program is executed by a processor, the method according to any one of claims 1 to 7 or the method according to any one of claims 8 to 14 is implemented.

34. A computer program product, wherein the computer program product comprises related program instructions, and when the related program instructions are executed, the method according to any one of claims 1 to 7 or the method according to any one of claims 8 to 14 is implemented.
